# EUROPEAN PATENT APPLICATION

(11) **EP 4 733 139 A1**
(43) Date of publication of application: **29.04.2026**
(21) Application number: 24208983.7
(22) Date of filing: 25.10.2024
(51) Int. Cl.: B60R 11/04

(54) **MOUNTING ARRANGEMENT FOR A DRIVER ASSIST SYSTEM AND VEHICLE DRIVER ASSIST SYSTEM**

(71) Applicant: ZF Friedrichshafen AG, 88046 Friedrichshafen (DE); ZF Automotive Systems Poland Sp. z.o.o., 42-202 Czestochowa (PL)
(72) Inventor: Wiernik, Marcin, 98-300 Wielu (PL)
(74) Representative: Ege Lee & Roider Patentanwälte

(57) **Abstract**

A mounting arrangement (100) for a driver assist system (102), the mounting arrangement (100) comprising: a housing (104) configured to mount a camera therein, the housing (104) having at least one tab (116, 200, 400, 600, 700); and a mounting bracket (106) connectable with a vehicle, the mounting bracket (106) including a channel (112) for receiving the tab (116, 200, 400, 600, 700) of the housing (104), the channel (112) being at least partially defined by an arm (118) extending from a sidewall (110) of the mounting bracket (106), the arm (118) having a guide surface (120) and the sidewall (110) having a guide surface (122), the guide surface (120) of the arm (118) and the guide surface (122) of the sidewall (110) at least partially defining an insertion opening (124), the tab (116, 200, 400, 600, 700) of the housing (104) is slidable into the channel (112) in the mounting bracket (106) through the insertion opening (124) to connect the housing (104) to the mounting bracket (106), the housing (104) and the tab (116, 200, 400, 600, 700) being pivotal relative to the mounting bracket (106) after the tab (116, 200, 400, 600, 700) has slid into the channel (112), wherein the tab (116, 200, 400, 600, 700) engages a curved surface (126, 302) of the arm (118) and a curved surface (128, 300) of the sidewall (110) when the housing (104) is connected to the mounting bracket (106), as well as a vehicle driver assist system (102) comprising a mounting arrangement (100).

## Description

### Technical Field

The present disclosure generally relates to a mounting arrangement for a driver assist system. In particular, a mounting arrangement for a driver assist system that is mountable to a vehicle, particularly to a vehicle window such as a windshield, is described. The present disclosure further relates to a vehicle driver assist system comprising the mounting arrangement.

### Background

Vehicle driver assist systems that use a camera to monitor the environment surrounding the vehicle are known. For example, one particular type of driver assist system monitors the area in front of the vehicle and uses a forward looking camera. It is common to mount a forward looking driver assist system to the front windshield of the vehicle. Such a forward looking driver assist system can aid a driver in the operation of a motor vehicle by providing operational information such as a potential collision, lane or roadway departure, location of pedestrians, road sign information, etc. Driver assist systems could also be mounted to other vehicle locations such as the rear window. Data from the driver assist system is provided to other vehicle systems to provide the driver with a warning, haptic or tactile feedback, and/or autonomous control of the vehicle.

Existing mounting arrangements do not always allow for perfect camera positioning and fixation. That is, some minor camera shifts are still possible, which may result in subjecting the driver assist system to vibrations and looseness, which may result in failures of the driver assist system.

### Summary

Accordingly, there is a need for a mounting arrangement capable of fixing a camera housing of the driver assist system in a desired position in the vehicle for ensuring accurate camera positioning and protecting against potential vibrations or looseness that may degrade or distort images from the camera.

The object is solved with a mounting arrangement having the features of claim 1. Further, the object is solved with a vehicle driver assist system having the features of claim 15. Advantageous embodiments and/or further embodiments are the subject of the dependent claims, the description and/or the accompanying figures.

According to an aspect, there is provided a mounting arrangement for a driver assist system. The driver assist system can be a vehicle driver assist system. The mounting arrangement comprises a housing, for example a camera housing. The housing is configured to mount a camera therein. In one implementation, the housing can have the camera mounted therein. Further, the housing has at least one tab. The at least one tab can be a forward tab. In one implementation, the housing may have two tabs on opposite sides of the housing. For example, the housing may have a forward tab on the left side and a forward tab on the right side of the housing. Further, the at least one tab may be a pin or may have a pin-like structure.

The mounting arrangement further includes a mounting bracket. The mounting bracket is connectable with a vehicle. In one implementation, the mounting bracket is connectable with a window, for example a windshield, of the vehicle. The mounting bracket includes a channel for receiving the tab of the housing. The mounting bracket may have one, two or more channels for receiving the at least one tab of the housing. In one realization, the mounting bracket may have two channels on opposite sides, for example on the left and right side, of the mounting bracket, wherein each of which may receive a tab of the housing. The channel of the mounting bracket is at least partially defined by an arm extending from a sidewall of the mounting bracket. The arm may be a flexible arm. The flexible arm may be configured to deflect. Further, the arm can be a front arm, for example a front locking arm. The arm has a guide surface and the sidewall has a guide surface. In one implementation, the guide surface of the arm and the guide surface of the sidewall may face to each other. The guide surface of the arm and the guide surface of the sidewall at least partially define an insertion opening. The insertion opening may face generally downwardly. The at least one tab of the housing is slidable into the channel in the mounting bracket through the insertion opening to connect the housing to the mounting bracket. The housing and the tab are pivotal relative to the mounting bracket after the tab has slid into the channel, wherein the tab engages a curved surface of the arm and a curved surface of the sidewall when the housing is connected to the mounting bracket.

In one realization, the curved surface of the sidewall extends from the guide surface of the sidewall. Alternatively, a chamfer portion is arranged on the sidewall between the curved surface of the sidewall and the guide surface of the sidewall. For example, the chamfer portion of the sidewall connects the guide surface of the sidewall with the curved surface of the sidewall. The curved surface of the arm may extend from the guide surface of the arm. Alternatively, a chamfer portion is arranged on the arm between the curved surface of the arm and the guide surface of the arm. For example, the chamfer portion of the arm connects the guide surface of the arm with the curved surface of the arm. Further, the curved surface of the sidewall and the curved surface of the arm may face to each other. In such an implementation, both, the curved surface of the sidewall and the curved surface of the arm may form an engagement structure for accommodating the tab therebetween. Further, the curved surface of the sidewall is formed substantially cylindrical or conical. Alternatively, or in addition, the curved surface of the arm is formed substantially cylindrical or conical.

The tab may be configured to be tight fit to at least one of the curved surface of the sidewall and the curved surface of the arm when the housing is connected to the mounting bracket after pivoting the housing and the tab relative to the mounting bracket. Further, the tab may have an interference fit with the curved surface of the sidewall and the curved surface of the arm when the housing is connected to the mounting bracket. In case the arm is a flexible arm, the flexible arm may be configured to deflect slightly when the tab of the housing is slid into the channel and/or when the tab of the housing is pivoted during the connection of the housing to the mounting bracket. In one implementation, the at least one tab may have at least one curved surface. The curved surface of the tab can be formed substantially complementary to the curved surface of the sidewall. Alternatively, or in addition, the curved surface of the tab can be formed substantially complementary to the curved surface of the arm. The least one curved surface of the tab may be formed substantially cylindrical or conical. Further, the at least one tab may have at least one flat surface. The flat surface of the tab can be formed substantially complementary to the guide surface of the sidewall. Alternatively, or in addition, the flat surface of the tab can be formed substantially complementary to the guide surface of the arm. In one implementation, the tab may have two curved surfaces arranged on opposite sides of the tab. In addition, the tab may have two flat surfaces arranged on opposite sides of the tab. The flat surfaces may extend between the curved surfaces of the tab.

In a further implementation, the tab, the curved surface of the sidewall and/or the curved surface of the arm may have at least one cam. The at least one cam can be configured to eliminate gaps, in particular gaps between the tab and the mounting bracket. Moreover, the mounting bracket and/or the housing may include at least one centering portion. The at least one centering portion can be configured to center the housing relative to the mounting bracket. In one realization, the at least one centering portion can have a conical surface configured to center the housing relative to the mounting bracket. Two or more centering portions can be provided. Thus, the mounting bracket and/or the housing may have two or more conical surfaces for centering the housing relative to the mounting bracket. The conical surfaces can face towards each other and/or can be aligned so that they have a common axis. For example, the tab may have the at least one conical surface, e.g., the at least one conically formed curved surface. Alternatively, or in addition, the sidewall and/or the arm may have the at least one conical surface. In this case, the at least one conical surface may be realized by the at least one conically formed curved surface of the sidewall and/or the at least one conically formed curved surface of the arm. Preferably, centering portions and/or conical surfaces are arranged on opposite and/or both sides of the mounting bracket and/or the housing, for example on both sides of the mounting bracket front mounting features. In another implementation, the at least one centering portion can be a centering element, for example a flange for centering the housing. The flange can be configured to center the housing relative to the mounting bracket. For example, the flange can be arranged on the at least one tab, e.g., the at least one housing front/forward tab. Preferably, a flange can be arranged on each front/forward tab. The flange can be a substantially rectangular or circular flange. It is understood that the flange may have other shapes and/or geometry. Further the flange can be arranged on a distal end of the at least one tab. In one implementation, the flange can have a chamfer, such as a lead-in chamfer. The chamfer may face toward the housing.

The mounting bracket may have at least one rear locking arm. In one implementation, the mounting bracket may have two rear locking arms, for example on opposite sides, e.g., on the left and right side, of the mounting bracket. Moreover, the housing may have at least one rearward tab. In one implementation, the housing may have two rearward tabs, for example on opposite sides, e.g., on the left and right side, of the housing. The at least one rearward tab of the housing can be configured to engage the at least one rear locking arm of the mounting bracket. In one realization, the at least one rear locking arm of the mounting bracket can be configured to lock onto the at least one rearward tab of the housing. the rearward tab on the housing may be configured to snap into the rear locking arm of the mounting bracket when the housing pivots relative to the mounting bracket. In one implementation, the rear locking arm can have a detent that is configured to engage the rearward tab. The detent may have an upper surface that can engage a lower surface on the rearward tab. The upper surface on the detent may extend generally perpendicular to a vertical surface on the rear locking arm. The lower surface on the rearward tab of the housing 104 may extend generally perpendicular to a vertical surface of the housing. Thus, the lower surface on the rearward tab of the housing may extend generally parallel to the upper surface on the detent of the rear locking arm when the housing is connected to the mounting bracket. Further, the rear locking arm may be flexible and/or configured as a spring member.

According to a further aspect, there is provided a vehicle driver assist system comprising a mounting arrangement as generally described above and/or hereinafter. The vehicle driver assist system can be configured to use a camera for aiding a driver in the operation of the vehicle. Moreover, the vehicle driver assist system can be configured as a forward looking system for monitoring the environment forward of the vehicle or as a rearward looking system for monitoring the environment rearward of the vehicle.

### Brief Description of the Drawings

Further details, advantages and aspects of the present disclosure will become apparent from the following embodiments taken in conjunction with the drawings, wherein:
- Fig. 1: shows a schematic side view of an embodiment of a mounting arrangement for a driver assist system;
- Fig. 2: shows an enlarged view of a portion of the mounting bracket of the mounting arrangement of Fig. 1;
- Fig. 3: shows another enlarged view of the portion of the mounting bracket of the mounting arrangement of Fig. 1;
- Fig. 4: shows an enlarged view of a portion of the housing of the mounting arrangement of Fig. 1;
- Fig. 5: shows an enlarged view of the insertion of the tab of the housing into the channel of the mounting bracket of the mounting arrangement of Fig. 1;
- Fig. 6: shows a view of a rear portion of the mounting arrangement of Fig. 1;
- Fig. 7: shows a further embodiment of a tab of the housing;
- Fig. 8: shows a further embodiment of curved surfaces of the mounting bracket;
- Fig. 9: shows a further embodiment of a tab of the housing;
- Fig. 10: shows a cross sectional view of a left and right side of the mounting bracket having the curved surfaces of Fig. 8;
- Fig. 11: shows a view of an embodiment of a flange arranged on the tab of the housing;
- Fig. 12: shows another view of the flange of Fig. 11;
- Fig. 13: shows a view of the tab having the flange of Fig. 11 inserted into the mounting bracket of the mounting arrangement of Fig. 1;
- Fig. 14: shows a view of another embodiment of a flange arranged on the tab of the housing; and
- Fig. 15: shows another view of the flange of Fig. 14.

### Detailed Description

In the following, embodiments of a mounting arrangement for a driver assist system will be described. The same reference numerals will be used to denote the same or similar structural features.

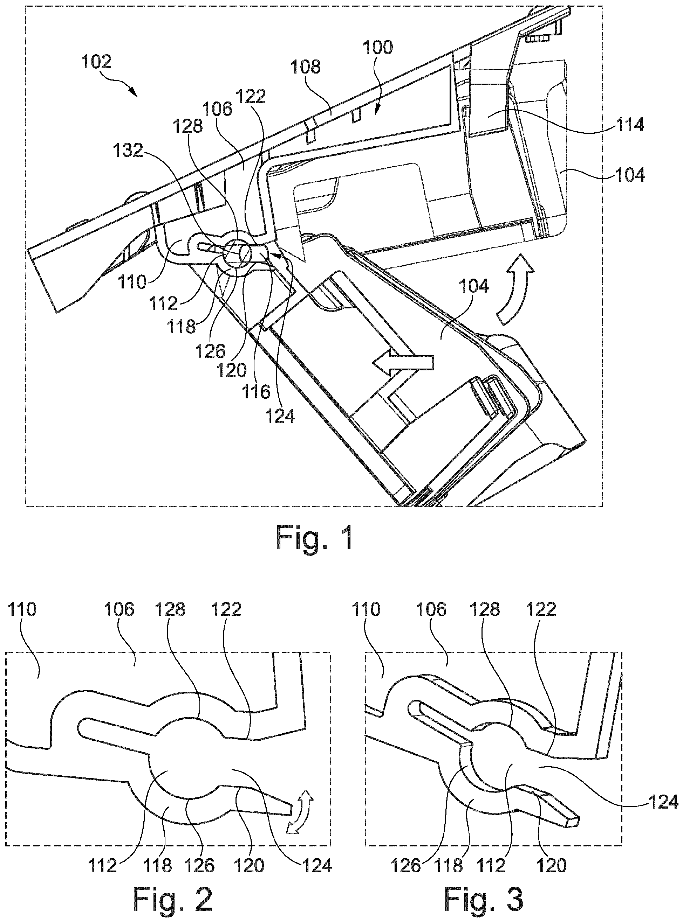

A schematic side view of an embodiment of a mounting arrangement 100 for a driver assist system 102 is described and is shown in Figs. 1 to 6. In the present embodiment, the driver assist system 102 is a vehicle driver assist system using a camera for aiding a driver in the operation of the motor vehicle. As shown in Fig. 1, the mounting arrangement 100 comprises a housing 104 configured to mount a camera (in Fig. 1 not shown) therein, and a mounting bracket 106 connectable with the vehicle. The camera or other sensor can be mounted within the housing 104. The camera can be operatively connected to data processing circuitry (not shown) within the housing 104 for processing any image within the field of view of the camera. The circuitry within the housing 104 can be connectable with other vehicle systems. In the present embodiment, the mounting bracket 106 is connectable with a window of the vehicle, such as a front windshield. The driver assist system 102 is thus configured as a forward looking system, though it is understood that other systems may utilize the features of the present embodiment. The driver assist system 102 views the environment outside of the vehicle and analyzes monitored information for vehicle functions, such as lane keeping, roadway departures, pedestrian information, road sign information, etc. The analyzed information is then further processed and used by vehicle control systems and/or warning systems. Alternatively, the mounding arrangement 100 can also be applicable to other driver assist systems such as a rearward facing system for monitoring the environment rearward of the vehicle.

The mounting bracket 106 is connectable to the window in any desired manner. The mounting bracket 106 may have a mounting portion 108 that is connectable to the window and at least one sidewall 110 that extends from the mounting portion 108 away from the window, particularly when the mounting bracket is connected to the window. The mounting bracket 106 may have two sidewalls 11 that extend on opposite sides of mounting bracket 106 and at least partially covering the housing 104 when the housing is connected to the bracket.

The mounting bracket 106 includes a channel 112 or slot. As shown in Figs. 1 to 3, the channel 112 is formed in the sidewall 110 and is configured as a forward channel. The mounting bracket 106 may have two forward channels 112, for example on opposite sides of the mounting bracket 106. However, it is also contemplated that the mounting bracket 106 may include any desired number of forward channels 112. Further, the mounting bracket 106 has at least one rear locking arm 114. The mounting bracket 106 may have two rear locking arms 114, however, it is also contemplated that the mounting bracket 106 may include any number of rear locking arms 114.

The housing 104 has at least one tab 116. The at least on tab 116 extends from the housing 104 and is configured as a forward tab. The housing 104 may have two forward tabs 116 extending from opposite sides of the housing 104. The channel 112 of the mounting bracket 106 is configured to receive the tab 116 of the housing 104.

As shown in Figs. 1 to 3, the channel 112 of the mounting bracket 106 is at least partially defined by an arm 118 extending from the sidewall 110 of the mounting bracket 106. The arm 118 may be a flexible arm. The flexible arm 118 can be configured to deflect slightly (illustrated by the curved arrow in Fig. 2). In the present embodiment, the arm 118 is a front arm, such as a front locking arm. The arm 118 has a guide surface 120 and the sidewall 110 has a guide surface 122. The guide surface 120 of the arm 118 and the guide surface 122 of the sidewall 110 face to each other and extend substantially parallel to each other. Moreover, the guide surface 120 of the arm 118 and the guide surface 122 of the sidewall 110 at least partially define an insertion opening 124. The insertion opening 124 may face generally downwardly.

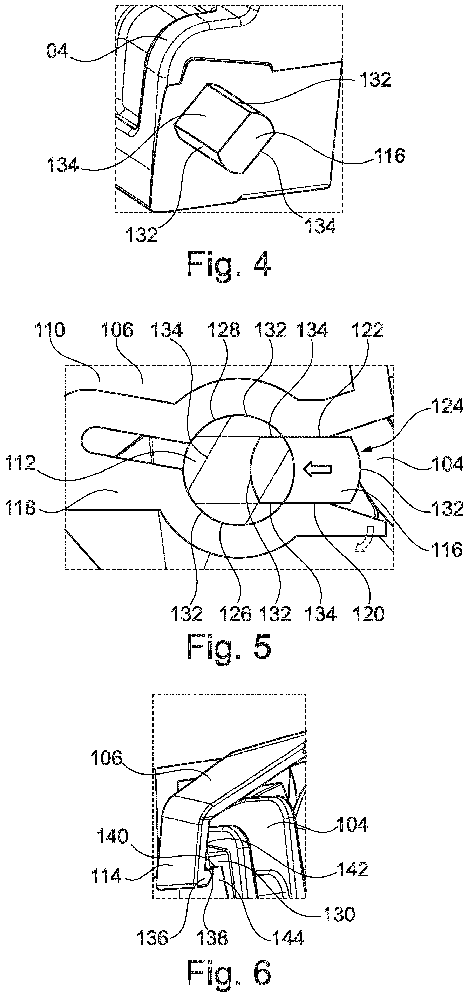

As shown in Figs. 1 and 5, the tab 116 of the housing 104 is slidable into the channel 112 in the mounting bracket 106 through the insertion opening 124 to connect the housing 104 to the mounting bracket 106 (in Fig. 1 and 5 illustrated with the arrow pointing to the left). The tab 116 of the housing 104 is configured to slide on the guide surface 120 of the arm 118 and the guide surface 122 of the sidewall 110. The housing 104 and the tab 116 are pivotal relative to the mounting bracket 106 (in Fig. 1 illustrated with the curved arrow pointing to the top) after the tab 116 has slid into the channel 122. The arm 118 can be configured to deflect slightly (in Fig. 5 illustrated by the curved arrow) when the tab 116 of the housing 104 is slid into the channel 112 and/or when the tab 116 of the housing 104 is pivoted during the connection of the housing 104 to the mounting bracket 106. When the housing 104 is connected to the mounting bracket, the tab 116 engages a curved surface 126 of the arm 118 and a curved surface 128 of the sidewall 110. Thus, the assembly of the housing 104 to the mounting bracket 106 can be done by forward movement of the housing 104 such that the tab 116 slides into the channel 112 of the mounting bracket 106 in first step and then rotation of the housing 104, for example by around 50 to 60 degrees as described in more detail below.

After the mounting bracket 106 is secured to the window or windshield, the housing 104 is snapped into the mounting bracket 106 by first inserting the tab 116 into the associated channel 112 of the mounting bracket 106 and then pivoting the rear end of the housing 104 into engagement with the rear locking arm 114 of the mounting bracket 106. The rear locking arm 114 engages, for example locks onto, an associated rearward tab 130 of the housing 12 as shown in Fig. 6, thereby securing the housing 104 into the mounting bracket 106. The housing 104 may have two rearward tabs 130 that extend from opposite sides of the housing 104.

The tab 116 is inserted into the insertion opening 124 with the rearward tab 130 spaced from the rear locking arm 114, as shown in Fig. 1. The guide surface 120 of the arm 118 and the guide surface 122 of the sidewall 110 guide insertion of the tab 116 into the channel 112. The tab 116 may be inserted into the channel 112 until the tab 116 abuts against the curved surface 126 of the arm 118 and/or the curved surface 128 of the sidewall 110.

After insertion of the tab 116 into the channel 112, the housing 104 may be pivoted relative to the mounting bracket 106 from the position shown in Fig. 1 illustrated with sold lines of the housing 104 toward the position shown in Fig. 1 illustrated with dashed lines of the housing 104. The rearward tab 130 moves toward the rear locking arm 114 as the housing 104 is pivoted relative to the mounting bracket 106. The housing 104 is pivoted until the tab 116 engages and tight fits to the curved surface 126 of the arm 118 and the curved surface 128 of the sidewall 110. The tab 116 may have an interference fit with the curved surface 126 of the arm 118 and the curved surface 128 of the sidewall 110 when the housing 104 is connected to the mounting bracket 106. Further, the rearward tab 130 may engage the rear locking arm114.

As shown in Figs. 1 to 3, the curved surface 128 of the sidewall 110 extends from the guide surface 122 of the sidewall 110. Likewise, the curved surface 126 of the arm 118 extends from the guide surface 120 of the arm 118. Further, the curved surface 128 of the sidewall 110 and the curved surface 126 of the arm 118 face to each other, such that both form an engagement structure for accommodating the tab 116 of the housing 104 therebetween. In the present embodiment, the curved surface 128 of the sidewall 110 as well as the curved surface 126 of the arm 118 are formed substantially cylindrical.

Moreover, as shown in Figs. 1, 4 and 5, the tab 116 of the housing 104 has two curved surfaces 132 arranged on opposite sides of the tab 116. The curved surfaces 132 of the tab 116 are formed substantially complementary to the curved surface 128 of the sidewall 110 and the curved surface 126 of the arm 118. In the present embodiment, the curved surfaces 132 of the tab 116 are formed substantially cylindrical. Further, tab 116 of the housing 104 has two flat surfaces 134 arranged on opposite sides of the tab 116. The flat surfaces 134 of the tab 116 are formed substantially complementary to the guide surface 122 of the sidewall 110 and the guide surface 120 of the arm 118. In addition, the flat surfaces 134 extend between the curved surfaces 132 of the tab 116 as shown in Figs. 4 and 5. Thus, as illustrated in Fig. 5, a relatively tight fit, e.g., with a small interference, is realized for mating the curved cylindrical surfaces 132 of the tab 116 of the housing 104 with the curved cylindrical surfaces 126, 128 of the mounting bracket 106, after the housing 104 is locked in position.

As shown in Fig. 6, the rearward tab 130 on the housing 104 snaps into the rear locking arm 114 of the mounting bracket 106 when the housing 104 pivots relative to the mounting bracket 106. The rear locking arm 114 has detent 136 that engages the rearward tab 130. The detent 136 has an upper surface 138 that engages a lower surface 140 on the rearward tab 130. The upper surface 138 on the detent 136 may extend transverse, e.g. substantially perpendicular, to a generally vertical surface 142 on the rear locking arm 114. The lower surface 140 on the rearward tab 130 of the housing 104 may extend transverse, e.g. substantially perpendicular, to a generally vertical surface 144 of the housing 104. Thus, the lower surface 140 on the rearward tab 130 of the housing 104 may extend generally parallel to the upper surface 138 on the detent 136 of the rear locking arm 114 when the housing 104 is connected to the mounting bracket 106. Further, the rear locking arm 114 may be flexible and/or configured as a spring member.

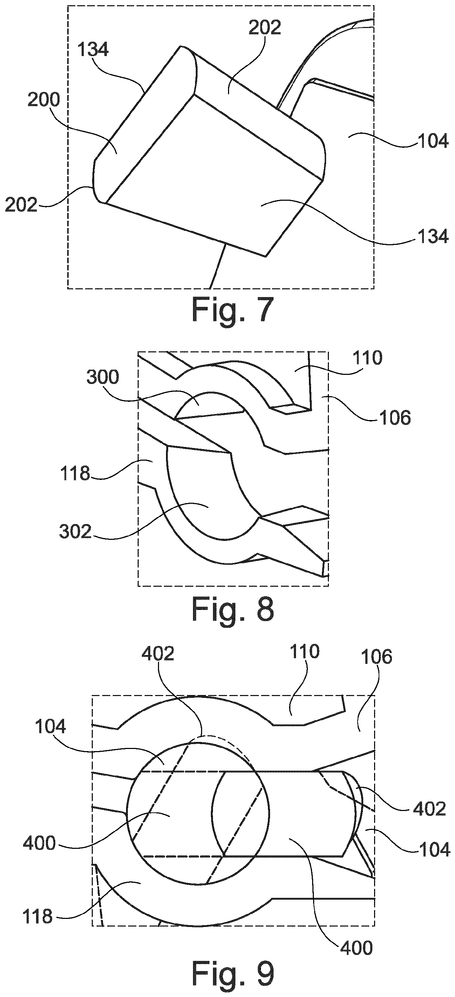

Fig. 7 shows a further embodiment of a tab 200 for the housing 104. The tab 200 is also configured as a forward tab. In contrast to the tab 116 of the embodiment shown in Figs. 1, 4 and 5, the forward tab 200 includes curved surfaces 202 that are formed substantially conical as shown in Fig. 7. Thus, the tab 200 as two conical curved surfaces 202 on opposite sides of the tab 200. The conical curved surfaces 202 may function as a centering portion, wherein the conical curved surfaces 202 may be configured to center the housing 104 relative to the mounting bracket 106.

Fig. 8 shows a further embodiment of curved surfaces 300, 302 of the mounting bracket 106. In the present embodiment, the curved surface 300 of the sidewall 110 as well as the curved surface 302 of the arm 118 are formed substantially conical instead of cylindrical. The conical curved surfaces 300, 302 may function as a centering portion, wherein the conical curved surfaces 300, 302 may be configured to center the housing 104 relative to the mounting bracket 106.

Fig. 9 shows a further embodiment of a forward tab 400 for the housing 104. The tab 400 includes at least one cam 402. The at least one cam 402 is configured to eliminate gaps and/or looseness, in particular gaps between the tab 400 and the mounting bracket 106.

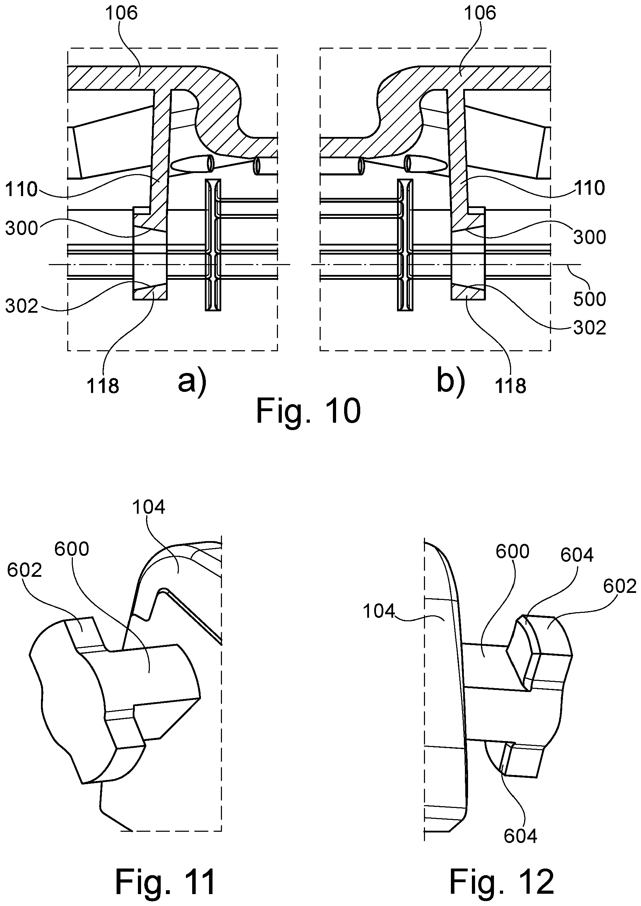

Fig. 10 shows a cross sectional view (viewed from the right to left in Fig. 1) of a left side (illustration a) of Fig. 10) and a right side (illustration b) of Fig. 10) of the mounting bracket 106. The left and right side each having a sidewall 110 and an arm 118. The sidewalls 110 have curved surfaces 300 and the arms 118 have curved surfaces 302. The curved surfaces 300 and the curved surfaces 302 are formed substantially conical as described with Fig. 8. The conical curved surfaces 300, 302 are arranged opposite to each other and on both sides of the mounting bracket 106. Further, the conical curved surfaces 300, 302 are configured to center the housing 104 relative to the mounting bracket 106. As shown in Fig. 10, the conical curved surfaces 300, 302 face towards each other and are aligned so that they have a common axis 500.

Figs. 11 to 13 show a forward tab 600 having a centering element 602 as centering portion. The centering element 602 is configured to center the housing 104 relative to the mounting bracket 106 when the housing 104 is connected to the mounting bracket 106 and when the housing 104 and the forward tab 600 are pivoted relative to the mounting bracket 106. In the embodiment shown in Figs. 11 to 13, the centering element 602 is a flange 602 for centering the housing 104. The flange 602 is arranged on the forward tab 600, here at a distal end of the forward tab 600. The flange 602 has a substantially rectangular form and includes a lead-in chamfer 604 facing toward the housing 104.

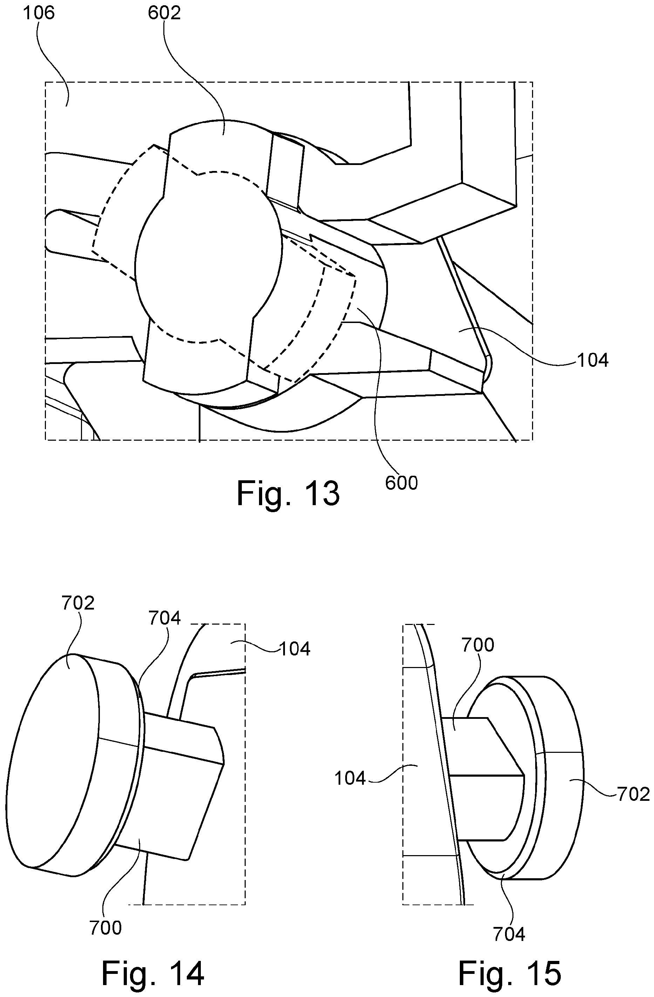

Figs. 14 to 15 show a further embodiment of a flange 702 used as centering element and arranged on a forward tab 700. In the present embodiment, the flange 702 has a substantially circular form and includes a lead-in chamfer 704 facing toward the housing 104.

The terms "may" and "can" refer in particular to optional features of the present disclosure. Accordingly, there are also further embodiments and/or embodiment examples of the present disclosure which additionally or alternatively have the respective feature or features.

If necessary, isolated features can also be selected from the feature combinations disclosed herein and used in combination with other features to define the claimed subject matter, while resolving any structural and/or functional relationship that may exist between the features.

It will thus be apparent that the present disclosure may be varied in many ways. Such variations are not to be regarded as a departure from the scope of the disclosure, and all modifications are intended to be included within the scope of the following claims.

### Reference signs

- 100: mounting arrangement
- 102: driver assist system
- 104: housing
- 106: mounting bracket
- 108: mounting portion
- 110: sidewall
- 112: channel
- 114: rear locking arm
- 116: forward tab
- 118: arm
- 120: guide surface of the arm
- 122: guide surface of the sidewall
- 124: insertion opening
- 126: curved surface of the arm
- 128: curved surface of the sidewall
- 130: rearward tab
- 132: curved surfaces of the forward tab
- 134: flat surfaces of the forward tab
- 136: detent
- 138: upper surface of the detent
- 140: lower surface of the rearward tab
- 142: substantially vertical surface of the rear locking arm
- 144: substantially vertical surface of the housing
- 200: forward tab
- 202: conical curved surfaces of forward tab
- 300: conical curved surface of the sidewall
- 302: conical guide surface of the arm
- 400: forward tab
- 402: cam
- 500: common axis
- 600: forward tab
- 602: centering element / flange
- 604: lead-in chamfer
- 700: forward tab
- 702: centering element / flange
- 704: lead-in chamfer

## Claims

1. A mounting arrangement (100) for a driver assist system (102), the mounting arrangement (100) comprising:
a housing (104) configured to mount a camera therein, the housing (104) having at least one tab (116, 200, 400, 600, 700); and
a mounting bracket (106) connectable with a vehicle, the mounting bracket (106) including a channel (112) for receiving the tab (116, 200, 400, 600, 700) of the housing (104), the channel (112) being at least partially defined by an arm (118) extending from a sidewall (110) of the mounting bracket (106), the arm (118) having a guide surface (120) and the sidewall (110) having a guide surface (122), the guide surface (120) of the arm (118) and the guide surface (122) of the sidewall (110) at least partially defining an insertion opening (124), the tab (116, 200, 400, 600, 700) of the housing (104) is slidable into the channel (112) in the mounting bracket (106) through the insertion opening (124) to connect the housing (104) to the mounting bracket (106), the housing (104) and the tab (116, 200, 400, 600, 700) being pivotal relative to the mounting bracket (106) after the tab (116, 200, 400, 600, 700) has slid into the channel (112), wherein the tab (116, 200, 400, 600, 700) engages a curved surface (126, 302) of the arm (118) and a curved surface (128, 300) of the sidewall (110) when the housing (104) is connected to the mounting bracket (106).

2. The mounting arrangement (100) according to claim 1, wherein the curved surface (128, 300) of the sidewall (110) extends from the guide surface (122) of the sidewall (110) and/or the curved surface (126, 302) of the arm (118) extends from the guide surface (120) of the arm (118).

3. The mounting arrangement (100) according to at least one of the preceding claims, wherein the curved surface (128, 300) of the sidewall (110) and the curved surface (126, 302) of the arm (118) facing to each other.

4. The mounting arrangement (100) according to at least one of the preceding claims, wherein the curved surface (128, 300) of the sidewall (110) and/or the curved surface (126, 302) of the arm (118) is formed substantially cylindrical or conical.

5. The mounting arrangement (100) according to at least one of the preceding claims, wherein the tab (116, 200, 400, 600, 700) is configured to be tight fit to at least one of the curved surface (128, 300) of the sidewall (110) and the curved surface (126, 302) of the arm (118) when the housing (104) is connected to the mounting bracket (106) after pivoting the housing (104) and the tab (116, 200, 400, 600, 700) relative to the mounting bracket (106).

6. The mounting arrangement (100) according to at least one of the preceding claims, wherein the tab (116, 200, 400, 600, 700) has an interference fit with the curved surface (128, 300) of the sidewall (110) and the curved surface (126, 302) of the arm (118) when the housing (104) is connected to the mounting bracket (106).

7. The mounting arrangement (100) according to at least one of the preceding claims, wherein the tab (116, 200, 400, 600, 700) has at least one curved surface (132, 202) which is formed substantially complementary to the curved surface (128, 300) of the sidewall (110) and/or the curved surface (126, 302) of the arm (118).

8. The mounting arrangement (100) according to at least one of the preceding claims, wherein the tab (116, 200, 400, 600, 700) has at least one flat surface (134) which is formed substantially complementary to the guide surface (122) of the sidewall (110) and/or the guide surface (120) of the arm (118).

9. The mounting arrangement (100) according to claims 7 and 8, wherein the tab (116, 200, 400, 600, 700) has two curved surfaces (132, 202) arranged on opposite sides of the tab (116, 200, 400, 600, 700) and wherein the tab (116, 200, 400, 600, 700) has two flat surfaces (134) arranged on opposite sides of the tab (116, 200, 400, 600, 700), wherein the flat surfaces (134) extend between the curved surfaces (132, 202) of the tab (116, 200, 400, 600, 700).

10. The mounting arrangement (100) according to at least one of the preceding claims, wherein the at least one curved surface (132, 202) of the tab (116, 200, 400, 600, 700) is formed substantially cylindrical or conical.

11. The mounting arrangement (100) according to at least one of the preceding claims, wherein the tab (116, 200, 400, 600, 700), the curved surface (128, 300) of the sidewall (110) and/or the curved surface (126, 302) of the arm (118) has at least one cam (402).

12. The mounting arrangement (100) according to at least one of the preceding claims, wherein the mounting bracket (106) and/or the housing (104) includes at least one centering portion (602, 702) configured to center the housing (104) relative to the mounting bracket (106).

13. The mounting arrangement (100) according to at least one of the preceding claims, wherein the guide surface (120) of the arm (118) and the guide surface (122) of the sidewall (110) facing to each other.

14. The mounting arrangement (100) according to at least one of the preceding claims, wherein the arm (118) is a flexible arm.

15. A vehicle driver assist system (102) comprising a mounting arrangement (100) according to at least one of the preceding claims.
